# EUROPEAN PATENT SPECIFICATION

(11) **EP 3 620 611 B1**
(45) Date of publication and mention of the grant of the patent: **16.11.2022**
(21) Application number: 19195683.8
(22) Date of filing: 05.09.2019
(51) Int. Cl.: F01D 9/04, F01D 11/08, F01D 25/12, F01D 25/24

(54) **UNIFIED BOAS SUPPORT AND VANE PLATFORM**
EINHEITLICHER BOAS-TRÄGER UND SCHAUFELPLATTFORM
SUPPORT DE JOINT D'AIR EXTERNE DE LAME UNIFIÉ ET PLATEFORME DE PALE

(30) Priority: 05.09.2018 US 201816122373
(43) Date of publication of application: 11.03.2020
(73) Proprietor: Raytheon Technologies Corporation, Farmington, CT 06032 (US)
(72) Inventor: BLANEY, Ken F., Middleton, NH New Hampshire 03887 (US); LUTJEN, Paul M., Kennebunkport, ME Maine 04046 (US); CLARK, Thomas E., Sanford, ME Maine 04073 (US)
(74) Representative: Dehns

(56) References cited:
- EP-A2- 0 940 562
- US-A- 3 990 807
- US-A- 5 044 881
- US-A1- 2012 247 121
- US-A1- 2015 044 049
- US-B1- 6 179 557
- US-B1- 6 217 279

## Description

### BACKGROUND

This application relates to a blade outer air seal support integrated with a vane platform.

Gas turbine engines are known and typically include a compressor for compressing air and delivering it into a combustor. The air is mixed with fuel in the combustor and ignited. Products of the combustion pass downstream over turbine rotors, driving them to rotate.

It is desirable to ensure that the bulk of the products of combustion pass over turbine blades on the turbine rotor. As such, it is known to provide blade outer air seals radially outwardly of the blades.

A turbine cooling is known from US 6 179 557 B1. An aircraft gas turbine is known from US 2012/247121 A1. Turbomachine clearance control is known from US 5 044 881 A. A device for sealing gas turbine stator blades is known from US 6 217 279 B1. A gas turbine is known from EP 0 940 562 A2. A dovetail retention system for blade tracks is known from US 2015/044049 A1. US 3 990 807 A discloses a thermal response shroud for a rotating body.

### SUMMARY

According to one aspect of the invention, a gas turbine engine as recited in claim 1 is provided.

In an embodiment of any of the above, the first support member is at a forward end of the structure.

In a further embodiment of any of the above, the second support member is at a radially innermost portion of the structure.

In a further embodiment of any of the above, the first axial side of the blade outer air seal has a radially extending hook for engaging the first support member.

In a further embodiment of any of the above, the second axial side of the blade outer air seal has an axially extending lip for engaging the second support member.

In a further embodiment of any of the above, a cooling air port extends through the attachment member between a blade outer air seal chamber and a vane chamber.

In a further embodiment of any of the above, the structure has a plurality of discrete hooks spaced circumferentially and extend radially outward from the structure.

In a further embodiment of any of the above, the plurality of discrete hooks engage with an attachment member on an engine static structure.

In a further embodiment of any of the above, the plurality of discrete hooks are aft of a first support member configured to engage a first axial side of the blade outer air seal.

In a further embodiment of any of the above, the support structure has a second attachment member that extends radially outwardly at a position aft of the vane platform portion for attachment to an engine static structure.

In a further embodiment of any of the above, the structure has a thermal barrier coating on a radially inner surface of the blade outer air seal support portion.

In a further embodiment of any of the above, the structure is a metallic material and the blade outer air seal is a ceramic matrix composite material.

In a further embodiment of any of the above, the vane is a ceramic matrix composite material.

In a further embodiment of any of the above, the blade outer air seal is a monolithic ceramic material.

In a further embodiment of any of the above, a second blade outer air seal is mounted in the support structure radially outward of a second turbine rotor.

In a further embodiment of any of the above, cooling air from both the blade outer air seal and the second blade outer air seal is communicated to a vane chamber radially outward of the vane.

These and other features may be best understood from the following drawings and specification.

### BRIEF DESCRIPTION OF THE DRAWINGS

Figure 1 schematically shows a gas turbine engine.
Figure 2 schematically shows a portion of a turbine section.
Figure 3 shows a blade outer air seal and support structure.
Figure 4 shows a cross-sectional view through a blade outer air seal and support.
Figure 5 shows a cross-sectional view through a blade outer air seal and support.
Figure 6 shows an exploded view of a blade outer air seal and support.
Figure 7 schematically shows another example portion of a turbine section.

### DETAILED DESCRIPTION

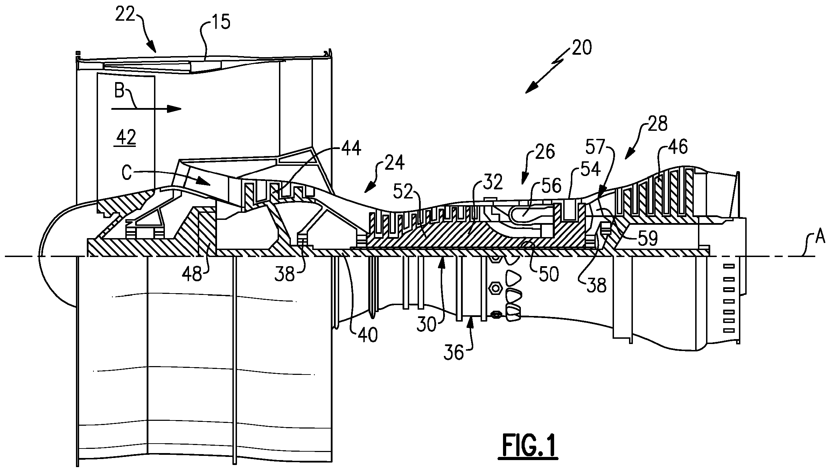

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350.5 meters/second).

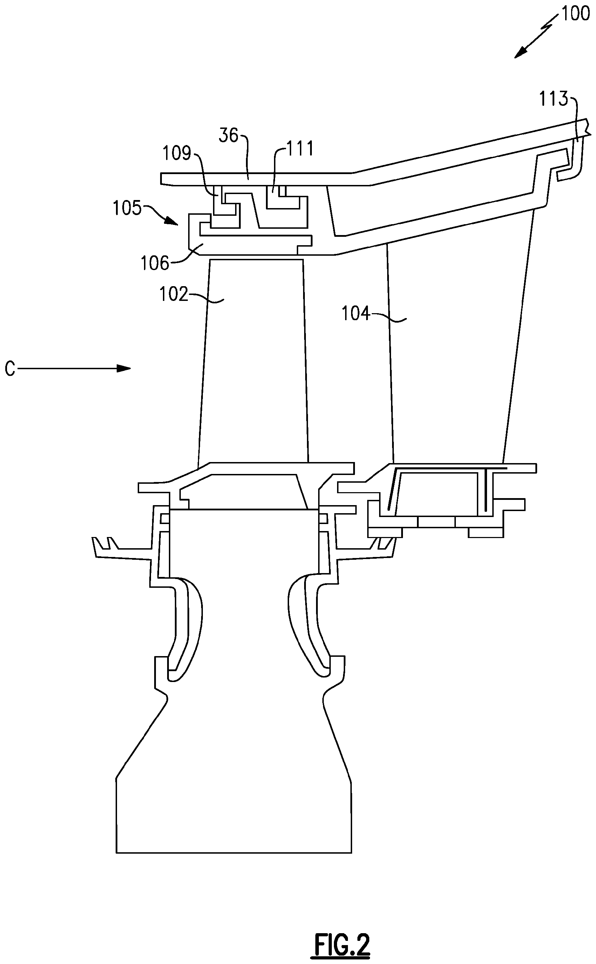

Figure 2 schematically shows a portion 100 of the turbine section 28. The portion 100 includes alternating series of rotating blades 102 and stationary vanes 104 that extend into the core flow path C of the gas turbine engine 20. Turbine blades 102 rotate and extract energy from the hot combustion gases that are communicated along the core flow path C of the gas turbine engine 20. The turbine vanes 104, which generally do not rotate, guide the airflow and prepare it for the next set of blades 102. As is known, it is desirable to pass the bulk of products of combustion downstream of the combustor section 26 across the turbine blades. Thus, a blade outer air seal ("BOAS") 106 is positioned slightly radially outwardly of the outer tip of the blades 102. It should be understood that the turbine section portion 100 could be utilized in other gas turbine engines, and even gas turbine engines not having a fan section at all.

The BOAS assembly 105 is attached to the engine static structure 36. The engine static structure 36 has a plurality of engagement features (or "attachment members") 109, 111, 113 for engagement with the BOAS assembly 105. In an embodiment, engagement features 109 and 111 are at an axial position between leading and trailing edges of the blade 102 and engagement feature 113 is aft of the vane 104. In another embodiment, engagement feature 111 is between the blade 102 and vane 104. Fewer or additional engagement features may be contemplated within the scope of this disclosure.

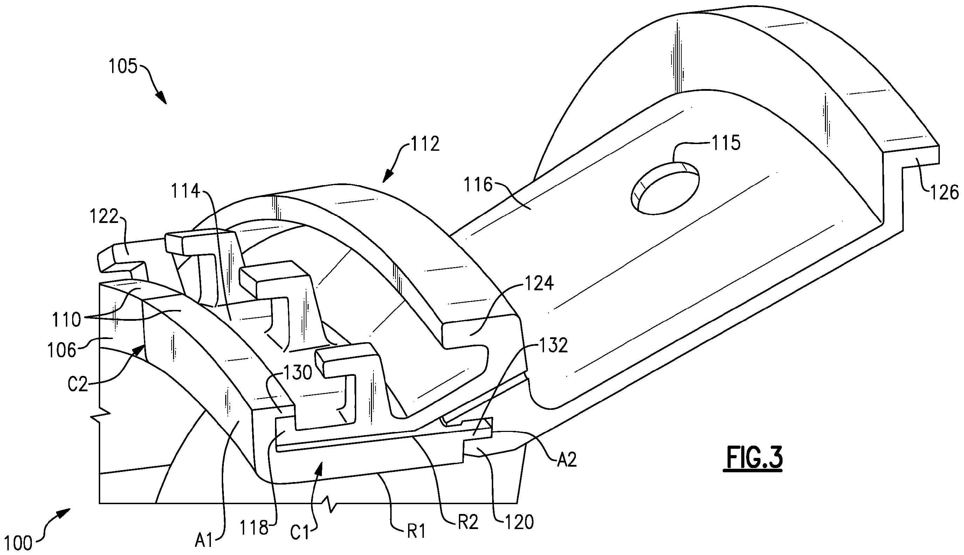

Figure 3 shows a BOAS assembly 105 having a BOAS 106 and supporting structure 112. The BOAS 106 includes a plurality of seal segments 110 that are circumferentially arranged in an annulus around the central axis A of the engine 20. The seal segments 110 are mounted in the structure 112, which is circumferentially continuous about the central axis A. The BOAS 106 is in close radial proximity to the tips of the blades 102 to reduce the amount of gas flow that escapes around the blades 102.

The seal segments 110 may be monolithic bodies that are formed of a high thermal-resistance, low-toughness material, such as a ceramic matrix composite fibers. In another embodiment, the seal segments 110 may be formed from another material, such as a metallic alloy or monolithic ceramic.

Each seal segment 110 is a body that defines radially inner and outer sides R1, R2, respectively, first and second circumferential ends C1, C2, respectively, and first and second axial sides A1, A2, respectively. The radially inner side R1 faces in a direction toward the engine central axis A. The radially inner side R1 is thus the gas path side of the seal segment 110 that bounds a portion of the core flow path C. The first axial side A1 faces in a forward direction toward the front of the engine 20 (i.e., toward the fan 42), and the second axial side A2 faces in an aft direction toward the rear of the engine 20 (i.e., toward the exhaust end).

The seal segments 110 are mounted in the structure 112, which includes a BOAS support portion 114 and a vane platform portion 116. The BOAS support portion 114 includes a first support member 118 that radially supports a hook 130 on the seal segment 110 at an axially forward portion of the seal segment 110 and a second support member 120 that radially supports a lip 132 on the seal segment 110 at an axially aft portion of the seal segment 110. The first support member 118 is the axially forward-most end of the structure 112. In an embodiment, the second support member 120 is the radially innermost portion of the structure 112.

The structure 112 may include a plurality of hooks for attachment to the engine 20. For example, the structure 112 may include a plurality of discrete hooks 122 extending radially outward from the BOAS support portion 114. The hooks 122 engage the engagement feature 109 (shown in Fig. 2). The structure 112 may include additional hook structures aft of the hooks 122. In the illustrated embodiment, an attachment member 124 extends radially outward from the structure 112 for attachment to the engine 20. The attachment member 124 may be at the same axial position as the second support member 120, or may be forward or aft of the second support member 120. The attachment member 124 engages the engagement feature 111 (shown in Fig. 2). The hooks 122 and attachment member 124 either both face forward or both face aft. A vane platform attachment member 126 extends radially outward from the vane platform portion 116. The attachment member 126 may face forward or aft.

In the illustrated embodiment, the vane platform attachment member 126 is axially aft of the vane 104. The vane platform attachment member 126 may be the radially outermost portion of the structure 112. The attachment member 126 engages the engagement feature 113 (shown in Fig. 2). Each of the attachment members 122, 124, 126 has a generally radially extending portion and a generally axially extending portion. Although three attachment members 122, 124, 126 and three engagement members 109, 111, 113 are shown, more or fewer may come within the scope of this disclosure.

The BOAS support portion 114 and vane platform portion 116 form a unified part. The metallic vane platform portion 116 may be used in conjunction with a CMC vane 104, so that the vane construction is multi-piece in nature. The vane 104 is secured between the vane platform portion 116, which provides the outer platform, and an inner platform. The vane 104 is secured to the inner and outer platforms via a bolt or turnbuckle. An access port 115 is provided on the vane platform portion 116 to accommodate the bolt or turnbuckle. The access port 115 may also allow cooling air to pass into the vane 104. The BOAS support portion 114 is joined with the vane platform portion 116 to allow the architecture to seal more easily and use cooling air more efficiently. This architecture may also allow BOAS cooling air to be re-used for cooling an adjacent vane 104.

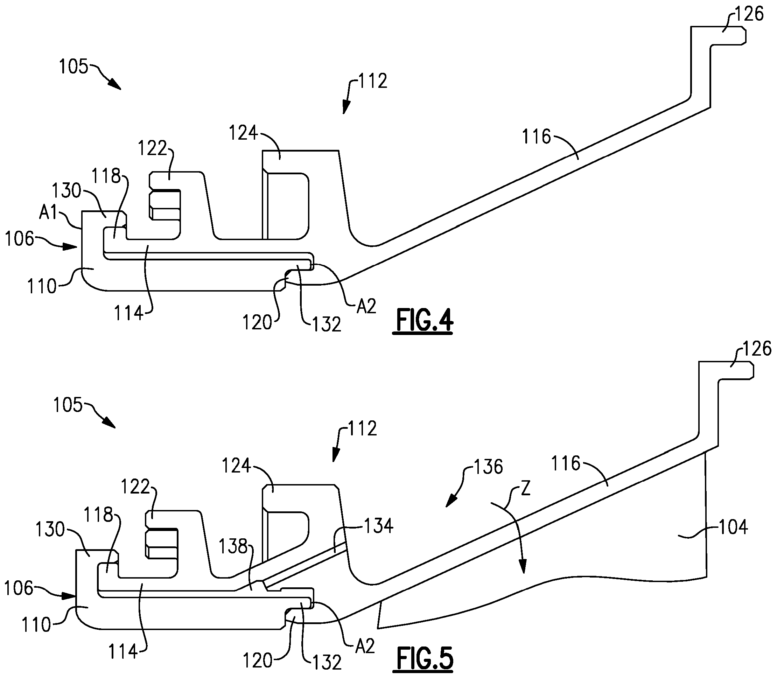

Figure 4 shows a cross section of the BOAS assembly 105 according to an embodiment. A hook 130 is formed in seal segment 110 of the BOAS 106 near the first axial side A1 for engagement with the first support member 118. The hook 130 is at a forward-most portion of the seal segment 110. The hook 130 includes a radially outwardly extending portion defining the first axial side A1 and an axially extending portion that extends aft of the first axial side A1. A lip 132 is formed in the seal segment 110 near the second axial side A2 for engagement with the second support member 120. The lip 132 extends generally axially from the seal segment 110. The BOAS may be assembled in a forward to aft direction, as the hook 130 and lip 132 will be received in the first and second support members 118, 120, respectively.

Figure 5 shows a cross section of the BOAS assembly 105 according to another embodiment. In this embodiment, a cooling air reuse port 134 extends between a vane chamber 136 and a BOAS chamber 138. The vane chamber 136 is formed between the vane platform portion 116 and an engine structure, such as the engine static structure 36 (shown in Figure 2). The BOAS chamber 138 is formed between the BOAS support portion 114 and the BOAS 106. The BOAS chamber 138 receives cooling air through an inlet on the BOAS 106 or BOAS support portion 114. Cooling air from the BOAS chamber 138 may be reused to cool the vane 104 by travelling through the cooling air port 134. The port 134 extends through a wall formed by attachment member 124. In one embodiment, the port 134 extends generally axially. In another embodiment, the port 134 may be a different orientation, such as generally radially, depending on the orientation of the hooks 122 and attachment member 124. For example, the port 134 may extend generally perpendicular to the axis A. The support structure 112 may include a plurality of cooling air reuse ports 134 spaced circumferentially about the support structure 112.

The port 134 re-uses cooling air that has been used for forced convection back side cooling of the BOAS 106 to cool an adjacent vane 104, as shown schematically at z. The used air can then be used to cool the adjacent vane 104, reducing the amount of cooling air required to be supplied by the compressor section 24, which may improve engine cycle efficiency. In some examples, cooling air from several BOAS 106 may be reused to cool a single vane 104.

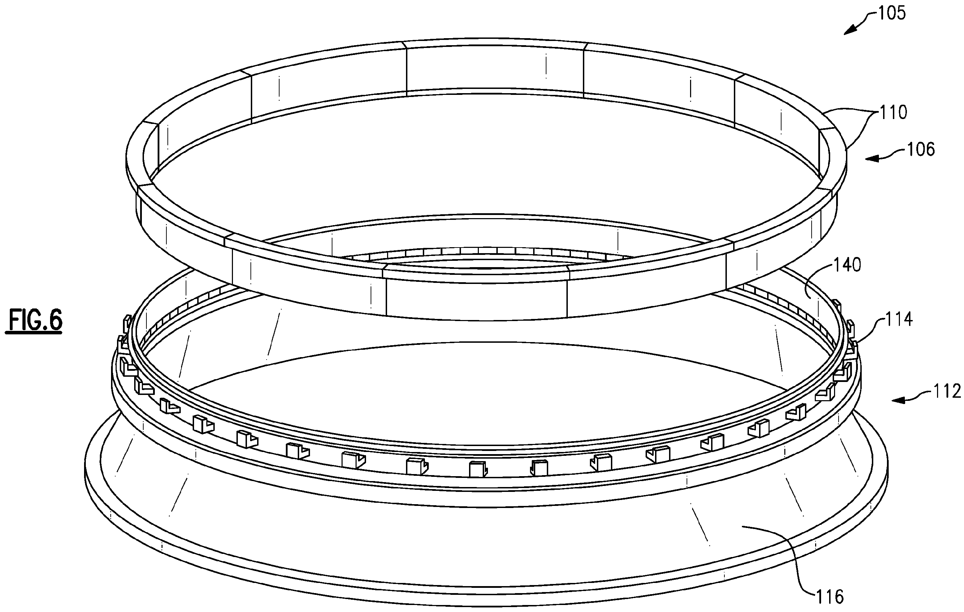

Figure 6 shows an exploded view of the BOAS assembly 105. As shown, the support structure 112 is a single circumferential piece, while the BOAS 106 may be made up of several seal segments 110. Although a single circumferentially extending support structure 112 is shown, the support may be two or more segmented pieces. In one example embodiment, the BOAS 106 includes twelve seal segments 110, though more or fewer seal segments 110 may fall within the scope of this disclosure. For example, the BOAS 106 may be a full ring part, rather than segmented.

The support structure 112 may have additional thermal protection by applying a thermal barrier coating to a radial inner surface of the support structure 112. In one embodiment, a thermal barrier coating may be applied to the support structure 112 at a radial inner surface 140. The radial inner surface 140 is adjacent the second radial portion R2 of the seal segment 110. This coating may protect the turbine in the event that the BOAS 106 or a seal segment 110 of the BOAS 106 is lost. During normal operation, this coating will control transient thermal response.

The support structure 112 having an integrated BOAS support portion 114 and vane platform portion 116 simplifies the assembly process, and simplifies sealing between the BOAS support portion 114 and vane platform portion 116. The disclosed support structure 112 may further enable cooling air reuse for improved engine efficiency. The unified support structure 112 could be utilized in one or more than one turbine stage, and may be used in a low pressure turbine 46 and/or a high pressure turbine 54.

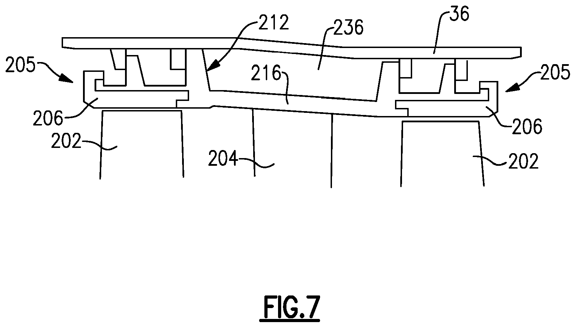

Figure 7 schematically shows another embodiment of the support structure 212. In this example, the unified support structure 212 provides a BOAS mount for multiple stages of turbine blades 202. The support structure 212 provides a mount for a BOAS 206 upstream of the vane 204 and vane platform portion 216 and a mount for a BOAS 206 downstream of the vane 204 and vane platform portion 216. Cooling air from each BOAS 206 may be reused to cool the vane chamber 236. The same concept can be extended to add additional vane platforms to the unified support structure.

In this disclosure, "generally axially" means a direction having a vector component in the axial direction that is greater than a vector component in the radial direction and "generally radially" means a direction having a vector component in the radial direction that is greater than a vector component in the axial direction.

Although an embodiment of this invention has been disclosed, a worker of ordinary skill in this art would recognize that certain modifications would come within the scope of this invention.

For that reason, the following claims should be studied to determine the true scope and content of this invention.

## Claims

1. A gas turbine engine (20), comprising:
a compressor section (24) and a turbine section (28), said turbine section (28) having at least one turbine rotor having a radially extending turbine blade (102, 202) and being rotatable about an axis of rotation (A), and at least one turbine vane (104, 204);
a blade outer air seal (106, 206) positioned radially outwardly of a radially outer tip of the turbine blade (102, 202); and
a structure (112, 212) mounting the blade outer air seal (106, 206) and providing a platform (116, 216) of the at least one turbine vane (104, 204), wherein the structure (112, 212) has a first support member (118) configured to engage a first axial side (A1) of the blade outer air seal (106, 206) and a second support member (120) configured to engage a second axial side (A2) of the blade outer air seal (106, 206),
wherein an attachment member (124) extends radially outward from the structure (112, 212) at a common axial position with the second support member (120),
wherein the structure (112, 212) is a unitary structure that extends circumferentially about the axis of rotation (A), and
a cooling air port (134) extends through the structure (112, 212) between a blade outer air seal chamber (138) and a vane chamber (136, 236), wherein the vane chamber (136, 236) is formed between the vane platform (116, 216) and an engine static structure (36), and the blade outer air seal chamber (138) is formed between the blade outer air seal (106, 206) and the structure (112, 212), and **characterised in that** the cooling air port is configured to deliver cooling air from the blade outer air seal chamber (138) to the vane chamber (136, 236).

2. The gas turbine engine of claim 1, wherein the first support member (118) is at a forward end of the structure (112, 212).

3. The gas turbine engine of claim 1 or 2, wherein the second support member (120) is at a radially innermost portion of the structure (112, 212).

4. The gas turbine engine of any preceding claim, wherein the first axial side (A1) of the blade outer air seal (106, 206) has a radially extending hook (130) for engaging the first support member (118).

5. The gas turbine engine of any preceding claim, wherein the second axial side (A2) of the blade outer air seal (106, 206) has an axially extending lip (132) for engaging the second support member (120).

6. The gas turbine engine of any preceding claim, wherein the cooling air port (134) extends through the attachment member (124) between the blade outer air seal chamber (138) and the vane chamber (136, 236).

7. The gas turbine engine of any preceding claim, wherein the structure (112, 212) has a plurality of discrete hooks (122) spaced circumferentially and extending radially outward from the structure (112, 212).

8. The gas turbine engine of claim 7, wherein the plurality of discrete hooks (122) engage with an attachment member (109, 111, 113) on an engine static structure (36).

9. The gas turbine engine of claim 7 or 8, wherein the plurality of discrete hooks (122) are aft of a or the first support member (118) configured to engage a first axial side (A1) of the blade outer air seal (106, 206).

10. The gas turbine engine of any preceding claim, wherein the structure (112, 212) has a second attachment member (126) extending radially outwardly at a position aft of the vane platform (116, 216) for attachment to an engine static structure (36).

11. The gas turbine engine of any preceding claim, wherein the structure (112, 212) has a thermal barrier coating on a radially inner surface of the structure (112, 212).

12. The gas turbine engine of any preceding claim, wherein the structure (112, 212) is a metallic material and the blade outer air seal (106, 206) is a ceramic matrix composite material.

13. The gas turbine engine of claim 12, wherein the vane (104, 204) is a ceramic matrix composite material.

14. The gas turbine engine of any of claims 1 to 11, wherein the blade outer air seal (106, 206) is a monolithic ceramic material.

15. The gas turbine engine of any preceding claim, wherein a second blade outer air seal (206) is mounted in the structure (212) radially outward of a second turbine rotor, optionally wherein cooling air from both the blade outer air seal (206) and the second blade outer air seal (206) is communicated to a or the vane chamber (236) radially outward of the vane (204).

## Patentansprüche

1. Gasturbinentriebwerk (20), das Folgendes umfasst:
einen Verdichterabschnitt (24) und einen Turbinenabschnitt (28), wobei der Turbinenabschnitt (28) mindestens einen Turbinenrotor aufweist, der eine sich radial erstreckende Turbinenschaufel (102, 202) aufweist und um eine Rotationsachse (A) drehbar ist, und mindestens eine Turbinenleitschaufel (104, 204);
eine äußere Schaufelluftdichtung (106, 206), die radial außerhalb einer radial äußeren Spitze der Turbinenschaufel (102, 202) positioniert ist; und
eine Struktur (112, 212), die die äußere Schaufelluftdichtung (106, 206) montiert und eine Plattform (116, 216) der mindestens einen Turbinenleitschaufel (104, 204) bereitstellt, wobei die Struktur (112, 212) ein erstes Stützelement (118) aufweist, das dazu konfiguriert ist, mit einer ersten axialen Seite (A1) der äußeren Schaufelluftdichtung (106, 206) zum Eingreifen zu kommen, und ein zweites Stützelement (120), das dazu konfiguriert ist, mit einer zweiten axialen Seite (A2) der äußeren Schaufelluftdichtung (106, 206) zum Eingreifen zu kommen,
wobei sich ein Befestigungselement (124) radial nach außen von der Struktur (112, 212) an einer gemeinsamen axialen Position mit dem zweiten Stützelement (120) erstreckt,
wobei die Struktur (112, 212) eine einheitliche Struktur ist, die sich umlaufend um die Rotationsachse (A) erstreckt, und
sich eine Kühlluftöffnung (134) durch die Struktur (112, 212) zwischen einer äußeren Schaufelluftdichtungskammer (138) und einer Leitschaufelkammer (136, 236) erstreckt, wobei die Leitschaufelkammer (136, 236) zwischen der Leitschaufelplattform (116, 216) und einer statischen Triebwerksstruktur (36) gebildet ist, und die äußere Schaufelluftdichtungskammer (138) zwischen der äußeren Schaufelluftdichtung (106, 206) und der Struktur (112, 212) gebildet ist, und **dadurch gekennzeichnet, dass** die Kühlluftöffnung dazu konfiguriert ist, Kühlluft von der äußeren Luftdichtungskammer (138) der Leitschaufelkammer (136, 236) zu liefern.

2. Gasturbinentriebwerk nach Anspruch 1, wobei sich das erste Stützelement (118) an einem vorderen Ende der Struktur (112, 212) befindet.

3. Gasturbinentriebwerk nach Anspruch 1 oder 2, wobei sich das zweite Stützelement (120) an einem radial innersten Teil der Struktur (112, 212) befindet.

4. Gasturbinentriebwerk nach einem vorstehenden Anspruch, wobei die erste axiale Seite (A1) der äußeren Schaufelluftdichtung (106, 206) einen sich radial erstreckenden Haken (130) zum Eingreifen mit dem ersten Stützelement (118) aufweist.

5. Gasturbinentriebwerk nach einem vorstehenden Anspruch, wobei die zweite axiale Seite (A2) der äußeren Schaufelluftdichtung (106, 206) eine sich axial erstreckende Lippe (132) zum Eingreifen mit dem zweiten Stützelement (120) aufweist.

6. Gasturbinentriebwerk nach einem vorstehenden Anspruch, wobei sich die Kühlluftöffnung (134) durch das Befestigungselement (124) zwischen der äußeren Schaufelluftdichtungskammer (138) und der Leitschaufelkammer (136, 236) erstreckt.

7. Gasturbinentriebwerk nach einem vorstehenden Anspruch, wobei die Struktur (112, 212) eine Vielzahl diskreter Haken (122) aufweist, die umlaufend beabstandet sind und sich von der Struktur (112, 212) radial nach außen erstrecken.

8. Gasturbinentriebwerk nach Anspruch 7, wobei die Vielzahl diskreter Haken (122) mit einem Befestigungselement (109, 111, 113) an einer statischen Triebwerksstruktur (36) zum Eingreifen kommt.

9. Gasturbinentriebwerk nach Anspruch 7 oder 8, wobei die Vielzahl diskreter Haken (122) hinter einem oder dem ersten Stützelement (118) liegt, das dazu konfiguriert ist, mit einer ersten axialen Seite (A1) der äußeren Schaufelluftdichtung (106, 206) zum Eingreifen zu kommen.

10. Gasturbinentriebwerk nach einem vorstehenden Anspruch, wobei die Struktur (112, 212) ein zweites Befestigungselement (126) aufweist, das sich radial nach außen an einer Position hinter der Leitschaufelplattform (116, 216) zur Befestigung an einer statischen Triebwerksstruktur (36) erstreckt.

11. Gasturbinentriebwerk nach einem vorstehenden Anspruch, wobei die Struktur (112, 212) eine Wärmesperrenbeschichtung auf einer radial inneren Oberfläche der Struktur (112, 212) aufweist.

12. Gasturbinentriebwerk nach einem vorstehenden Anspruch, wobei die Struktur (112, 212) ein metallisches Material ist und die äußere Schaufelluftdichtung (106, 206) ein Keramikmatrix-Verbundmaterial ist.

13. Gasturbinentriebwerk nach Anspruch 12, wobei die Leitschaufel (104, 204) ein Keramikmatrix-Verbundmaterial ist.

14. Gasturbinentriebwerk nach einem der Ansprüche 1 bis 11, wobei die äußere Schaufelluftdichtung (106, 206) ein monolithisches Keramikmaterial ist.

15. Gasturbinentriebwerk nach einem vorstehenden Anspruch, wobei eine zweite äußere Schaufelluftdichtung (206) in der Struktur (212) radial außerhalb eines zweiten Turbinenrotors montiert ist, wobei wahlweise Kühlluft sowohl von der äußeren Schaufelluftdichtung (206) als auch von der zweiten äußeren Schaufelluftdichtung (206) an eine oder die Laufschaufelkammer (236) radial außerhalb der Leitschaufel (204) kommuniziert wird.

## Revendications

1. Moteur à turbine à gaz (20) comprenant :
une section de compresseur (24) et une section de turbine (28), ladite section de turbine (28) ayant au moins un rotor de turbine ayant une pale de turbine s'étendant radialement (102, 202) et pouvant tourner autour d'un axe de rotation (A), et au moins une aube de turbine (104, 204) ;
un joint d'étanchéité à l'air externe de pale (106, 206) positionné radialement vers l'extérieur d'un bout radialement externe de la pale de turbine (102, 202) ; et
une structure (112, 212) de montage du joint d'étanchéité à l'air externe de pale (106, 206) et fournissant une plate-forme (116, 216) de l'au moins une aube de turbine (104, 204), dans lequel la structure (112, 212) a un premier élément de support (118) configuré pour venir en prise avec un premier côté axial (A1) du joint d'étanchéité à l'air externe de pale (106, 206) et un second élément de support (120) configuré pour venir en prise avec un second côté axial (A2) du joint d'étanchéité à l'air externe de pale (106, 206),
dans lequel un élément de fixation (124) s'étend radialement vers l'extérieur depuis la structure (112, 212) dans une position axiale commune avec le second élément de support (120), dans lequel la structure (112, 212) est une structure unitaire qui s'étend circonférentiellement autour de l'axe de rotation (A), et
un orifice d'air de refroidissement (134) s'étend à travers la structure (112, 212) entre une chambre étanche à l'air externe de pale (138) et une chambre d'aube (136, 236), dans lequel la chambre d'aube (136, 236) est formée entre la plate-forme d'aube (116, 216) et une structure statique de moteur (36), et la chambre étanche à l'air externe de pale (138) est formée entre le joint d'étanchéité à l'air externe de pale (106, 206) et la structure (112, 212), et **caractérisé en ce que** l'orifice d'air de refroidissement est configuré pour fournir de l'air de refroidissement de la chambre étanche à l'air externe de pale (138) à la chambre d'aube (136, 236).

2. Moteur à turbine à gaz selon la revendication 1, dans lequel le premier élément de support (118) se trouve à une extrémité avant de la structure (112, 212).

3. Moteur à turbine à gaz selon la revendication 1 ou 2, dans lequel le second élément de support (120) se trouve au niveau d'une partie radialement la plus intérieure de la structure (112, 212).

4. Moteur à turbine à gaz selon une quelconque revendication précédente, dans lequel le premier côté axial (A1) du joint d'étanchéité à l'air externe de pale (106, 206) a un crochet s'étendant radialement (130) pour venir en prise avec le premier élément de support (118).

5. Moteur à turbine à gaz selon une quelconque revendication précédente, dans lequel le second côté axial (A2) du joint d'étanchéité à l'air externe de pale (106, 206) a un rebord s'étendant axialement (132) pour venir en prise avec le second élément de support (120).

6. Moteur à turbine à gaz selon une quelconque revendication précédente, dans lequel l'orifice d'air de refroidissement (134) s'étend à travers l'élément de fixation (124) entre la chambre étanche à l'air externe de pale (138) et la chambre d'aube (136, 236) .

7. Moteur à turbine à gaz selon une quelconque revendication précédente, dans lequel la structure (112, 212) a une pluralité de crochets distincts (122) espacés circonférentiellement et s'étendant radialement vers l'extérieur depuis la structure (112, 212).

8. Moteur à turbine à gaz selon la revendication 7, dans lequel la pluralité de crochets distincts (122) viennent en prise avec un élément de fixation (109, 111, 113) sur une structure statique de moteur (36).

9. Moteur à turbine à gaz selon la revendication 7 ou 8, dans lequel la pluralité de crochets distincts (122) sont à l'arrière d'un ou du premier élément de support (118) configuré pour venir en prise avec un premier côté axial (A1) du joint d'étanchéité à l'air externe de pale (106, 206).

10. Moteur à turbine à gaz selon une quelconque revendication précédente, dans lequel la structure (112, 212) a un second élément de fixation (126) s'étendant radialement vers l'extérieur à une position à l'arrière de la plate-forme d'aube (116, 216) pour la fixation à une structure statique de moteur (36) .

11. Moteur à turbine à gaz selon une quelconque revendication précédente, dans lequel la structure (112, 212) a un revêtement barrière thermique sur une surface radialement intérieure de la structure (112, 212).

12. Moteur à turbine à gaz selon une quelconque revendication précédente, dans lequel la structure (112, 212) est en matériau métallique et le joint d'étanchéité à l'air externe de pale (106, 206) est en matériau composite à matrice céramique.

13. Moteur à turbine à gaz selon la revendication 12, dans lequel l'aube (104, 204) est en matériau composite à matrice céramique.

14. Moteur à turbine à gaz selon l'une quelconque des revendications 1 à 11, dans lequel le joint d'étanchéité à l'air externe de pale (106, 206) est en matériau céramique monolithique.

15. Moteur à turbine à gaz selon une quelconque revendication précédente, dans lequel un second joint d'étanchéité à l'air externe de pale (206) est monté dans la structure (212) radialement vers l'extérieur d'un second rotor de turbine, éventuellement dans lequel l'air de refroidissement provenant à la fois du joint d'étanchéité à l'air externe de pale (206) et du second joint d'étanchéité à l'air externe de pale (206) communique avec une ou la chambre d'aube (236) radialement vers l'extérieur de l'aube (204).
